Europäisches Patentamt

European Patent Office

Office européen des brevets

(11) Veröffentlichungsnummer: **0 211 348 B1**

# EUROPÄISCHE PATENTSCHRIFT

(45) Veröffentlichungstag der Patentschrift: 25.03.92

(51) Int. Cl.⁵: **H04R 9/02**, H04N 5/64

(21) Anmeldenummer: 86110261.4

(22) Anmeldetag: 25.07.86

(54) Gerät der Nachrichtentechnik mit einem Lautsprecher.

(30) Priorität: 31.07.85 DE 3527365
27.12.85 DE 3546185

(43) Veröffentlichungstag der Anmeldung:
25.02.87 Patentblatt 87/09

(45) Bekanntmachung des Hinweises auf die
Patenterteilung:
25.03.92 Patentblatt 92/13

(84) Benannte Vertragsstaaten:
AT BE CH DE FR GB IT LI LU NL SE

(56) Entgegenhaltungen:

FUNKSCHAU, Band 50, Nr. 6, März 1978, Seiten 257-258; G. HECHT et al.: "Streuarme Lautsprecher für Fernsehempfänger"

JOURNAL OF THE AUDIO ENGINEERING SOCIETY, Band 21, Nr. 3, April 1973, Seiten 177-180; J.K. IVERSON: "The theory of loudspeaker cabinet resonances"

(73) Patentinhaber: EWD Electronic-Werke
Deutschland GmbH

W-7730 Villingen-Schwenningen(DE)

(72) Erfinder: Goseberg, Walter
Kopenhagenerstrasse 81
W-3000 Hannover(DE)
Erfinder: Renner, Hans
Am Kleikamp 16
W-3014 Laatzen 5(DE)
Erfinder: Gieselmann, Heinrich
Rambergstrasse 38
W-3000 Hannover 1(DE)

(74) Vertreter: Einsel, Robert, Dipl.-Ing.
NEWEK Neue Elektronik-Werke GmbH
Patent- und Lizenzabteilung Göttinger
Chaussee 76
W-3000 Hannover 91(DE)

## Beschreibung

Die Erfindung betrifft einen Farbfernsehempfänger mit einer Bildröhre gemäß dem Oberbegriff des Anspruchs 1.

Im Fernsehempfänger ist der Lautsprecher im allgemeinen an einer als Schallführung dienenden Schallwand befestigt. Die Schallwand ist z.B. der die Vorderwand bildende Bildrohrrahmen.

Farbfernsehempfänger werden heute teilweise mit sogenannten Rechteckfarbbildröhren versehen. Diese haben gegenüber bisherigen Bildröhren einen flacheren, also weniger gewölbten Bildschirm und sind der Rechteckform noch mehr als bisher angepaßt. Bei derartigen Farbfernsehempfängern zeigten sich bisher nicht bekannte, unerklärliche Störungen im Bild, etwa in Form von unregelmäßig über den Bildschirm wandernden Schattenstrukturen.

Die Farbsignale, mit denen die Bildröhre gesteuert wurde, hatten keine Störkomponenten, die derartige Bildstörungen hätten verursachen können. Auch die an die Bildröhre angelegten Ablenkströme und sonstigen Steuerspannungen erwiesen sich als einwandfrei. Auch äußere Magnetfelder, die derartige Bildstörungen hätten verursachen können, waren nicht feststellbar. Ein Fehler innerhalb der Bildröhre lag offenbar auch nicht vor, da die Störungen unregelmäßig auftraten und gelegentlich ganz ausblieben. Der Grund für die genannten Störungen war zunächst trotz eingehender Überlegungen und Messungen nicht feststellbar.

Der Erfindung liegt die Aufgabe zugrunde, mit geringen konstruktiven Aufwand die beschriebene Störung im Bild zu beseitigen.

Diese Aufgabe wird durch die im unabhängigen Anspruch 1 angegebene Erfindung gelöst. Vorteilhafte Weiterbildungen der Erfindung sind in den abhängigen Unteransprüchen angegeben.

Es ist auch ein Fernsehempfänger bekannt (Funkschau 1978, Heft 6, Seite 257 - 258), bei dem der Lautsprecher neben dem eigentlichen Permanentmagneten einen zusätzlichen Kompensationsmagneten aufweist, mit dem die Störstrahlung des eigentlichen Magneten verringert wird. Die Aufgabe, im Bild auftretenden Störungen zu verringern, wird dort jedoch nicht behandelt. Der Permanentmagnet dient auch nicht dazu, die Masse des Lautsprecherkorbes über den für die Funktion des Lautsprechers benötigten Wert hinaus bewußt zu erhöhen.

Die Erfindung beruht auf folgenden Tatsachen und Erkenntnissen.

Der in dem Gehäuse des Farbfernsehempfängers vorhandene Lautsprecher erzeugt die Schallschwingungen durch Schwingen der von der Schwingspule angetriebenen Membran. Der vom Lautsprecherkorb getragene Magnet wird dabei als stationär angenommen. Der Lautsprechermagnet erzeugt jedoch ebenfalls Schwingungen von nicht zu vernachlässigender Amplitude und Frequenz. Diese Schwingungen gelangen über den Korb auf den die Bildröhre tragenden Deckrahmen und von da über die Bildröhre auf die in der Bildröhre befindliche Lochmaske. Die Aufhängung der Lochmaske in der Röhre war so bemessen, daß durch diese Schwingungen die Lochmaske zu Bewegung veranlaßt wurde, die die genannten Bildstörungen verursachten. Diese Wirkung konnte in überraschender Weise lediglich durch eine Vergrößerung der Masse des stationären Lautsprecherkorbes weitestgehend ausgeschaltet werden. Durch die Erhöhung der Masse werden Resonanzfrequenz und Amplitude der Schwingungen des Lautsprecherkorbes derart verschoben, daß die durch das Zusammenwirken der Resonanzfrequenzen des Lautsprecherkorbes und der Resonanzfrequenz der Lochmaske erzeugten unerwünschten Bewegungen der Lochmaske nicht mehr auftreten. Die Störungen blieben eindeutig aus, wenn z.B. eine zusätzliche Masse an dem Lautsprecherkorb angebracht wurde, und traten nach dem Entfernen dieser Masse wieder auf, so daß eine reproduzierbare Lösung der Aufgabe vorliegt.

Der erfindungsgemäße Körper besteht vorzugsweise aus einem Topf, der auf den Magneten aufgesetzt ist. Wenn der Topf im wesentlichen starr ist, z.B. aus Zinkdruckguß besteht, wird der Topf vorzugsweise an den Magneten angeklebt.

Gemäß einer Weiterbildung der Erfindung ist der Körper aus einem gummiartigen oder gummiähnlichen nachgiebigen Material hergestellt und kraftschlüssig selbsthaltend von Hand auf den Magneten aufsteckbar. Dadurch wird insbesondere der Zeitaufwand für die Anbringung des Körpers an den Magneten verringert, weil ein Klebevorgang nicht mehr erforderlich ist. Bei einem praktisch erprobten Ausführungsbeispiel betrug die Masse des Körpers 240 g. Um durch den zusätzlichen Körper das Gewicht eines Farbfernsehempfängers nicht unnütz zu erhöhen, kann das Gewicht des Körpers oder ein Teil davon durch ohnehin im Gerät benötigten Bauteile oder Baugruppen gebildet sein. Der Körper kann z.B. ein Gehäuse sein, das ein Netzteil, größere Kondensatoren, Signalverarbeitungs-Schaltungen oder Teil der Ablenkschaltung enthält. Dabei werden vorzugsweise Bauteil oder Baugruppen gewählt, die durch das Magnetfeld des Lautsprechers nicht beeinträchtigt werden.

Die Lösung mit einem Körper aus einem gummiartigen oder gummiähnlichen Material hat darüberhinaus folgende Vorteile:

Der Körper selbst wird zunächst gegenüber einem bisher verwendeten Körper aus Stahl, Aluminium oder dergleichen wesentlich billiger. Als Material für den Körper kann z.B. Altgummi, auch Abfallgummi oder Zweitgummi, verwendet werden, das als Abfallpodukt in der Industrie in großen Mengen verfügbar und entsprechend billig ist. Die Verwendung derartigen Altgummis ist möglich, weil der Körper keiner statischen oder dynamischen Beanspruchung unterliegt und lediglich durch seine Masse wirkt. Dadurch, daß der Körper selbsthaltend von Hand auf den Magneten aufsteckbar ist, wird die Anbringung des Körpers an dem Magneten beträchtlich vereinfacht. Die Anbringung erfolgt nur mit einem Handgriff, indem der Körper von der Rückseite des Lautsprechers von Hand auf den Magneten aufgesteckt wird. Danach ist der Körper kraftschlüssig an dem Magneten gehalten. Besonders vorteilhaft dabei ist, daß für die Befestigung kein Kleber notwendig ist und auch keine Wartezeit auftritt.

Die Anbringung des Körpers kann in der Fertigung direkt am Montageband erfolgen. Es ist nicht notwendig, daß der Lautsprecher für die Anbringung des zusätzlichen Körpers zunächst an eine gesonderte Bearbeitungsstelle gebracht wird. Das notwendige Gewicht des Körpers kann dadurch erreicht werden, daß dem gummiartigen oder gummiähnlichen Material Zusätze beigegeben sind, die das spezifische Gewicht des Körpers erhöhen. Diese homogen verteilten Zusätze können z.B. aus Quarzsand, Metallspänen oder fein verteilten Kugeln hohen spezifischen Gewichtes bestehen. Durch diese Lösung kann für den Körper ein spezifisches Gewicht von etwa 2,5 - 2,7 g/cm$^3$ erreicht werden. Das Volumen des erfindungsgemäßen Körpers wird möglicherweise größer als das Volumen eines entsprechenden Körpers aus Stahl bei gleichem Gewicht. Dies ist jedoch kein Nachteil, weil in einem Fernsehempfänger im Bereich des Lautsprechermagneten im allgemeinen genügend Platz vorhanden ist. Ein weiterer Vorteil besteht darin, daß der Körper mühelos wieder von dem Magneten abnehmbar ist, z.B. um den Lautsprecher ohne den Körper zu betreiben, den Körper bei defektem Lautsprecher erneut zu verwenden oder den Körper durch einen anderen Körper größerer Masse zu ersetzen. Das gummiartige Material hat noch den Vorteil, daß im Gegensatz zu Stahl die Gefahr einer Oberflächenkorsion nicht besteht und somit eine besondere Oberflächenbehandlung nicht erforderlich ist. Der Körper ist außerdem antimagnetisch, so daß eine Störung der magnetischen Eigenschaften des Lautsprechers oder anderer in der Nähe befindlicher Bauteile nicht eintreten kann.

Die Erfindung wird im folgenden an Hand der Zeichnung erläutert. Darin zeigen:

Fig. 1 die erfindungsgemäße Lösung für einen Farbfernsehempfänger,

Fig. 2 ein Beispiel für einen Körper aus gummiartigen Material und

Fig. 3 ein konstruktive Ausbildung des Körpers.

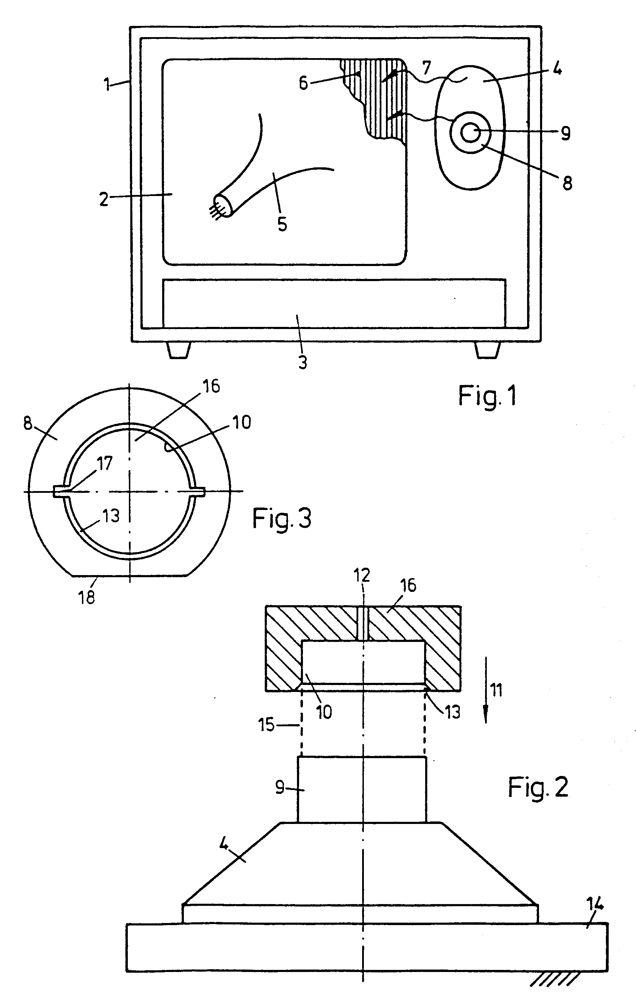

Fig. 1 zeigt die Rückansicht eines offenen Farbfernsehempfängers mit dem Gehäuse 1, der Bildröhre 2, dem Chassis 3 und dem Lautsprecher 4. Die Bildröhre 2 enthält den Röhrenhals 5 sowie die teilweise symbolisch angeordnete Lochmaske 6 im Bereich des Bildschirms. Beim Betrieb erzeugt der an sich stationäre Magnet 9 des Lautsprechers 4 Schwingungen 7, die über das Gehäuse 1, den die Bildröhre 2 umgebenden Deckrahmen oder auch auf dem Luftwege auf die Lochmaske 6 gelangen und diese zu schwingungsartigen, unregelmäßigen Bewegungen veranlassen, die zu Bildstörungen führen. Am Magneten 9 des Lautsprechers 4 ist der zusätzliche zylinderförmige Körper 8 aus Aluminium angebracht, der den Magneten 9 hülsenförmig umgibt und die Masse des Lautsprechers erhöht. Dadurch werden die Frequenzen der Schwingungen 7 soweit verschoben und/oder ihre Amplitude soweit verringert, daß auf Grund der Lage der Resonanzfrequenzen der Lochmaske 6 und des Lautsprechers keine Bildstörungen mehr auftreten. Der Körper 8 kann selbsthaltend magnetisch an dem Magneten 9 des Lautsprechers 4 gehalten sein, so daß für die Anbringung keine zusätzlichen Haltemittel und keine komplizierten Maßnahmen notwendig sind. Der Körper 8 kann auch Bauteil oder Baugruppen der Schaltung enthalten und z.B. elektrisch mit Komponenten des Chassis 3 oder der Bildröhre 2 verbunden sein.

Fig. 2 zeigt den Lautsprecher 4 mit dem Magneten 9. Für die Erhöhung der Masse des stationären Teils des Lautsprechers ist der Körper 8 in Form eines Topfes aus einem gummiartigen oder gummiähnlichen Material ausgebildet. Der Körper 8 wird von Hand in Richtung 11 auf den Magneten 9 stramm aufgesteckt. Zu diesem Zweck ist der Durchmesser der Öffnung 10 etwas geringer als der Außendurchmesser des Magneten 9, wie durch die gestrichelten Linien 15 angedeutet. Zur Erleichterung des Einsteckens ist der innere Durchmesser der Öffnung 10 zum offenen Ende hin in Form einer Fase 13 erweitert. Außerdem ist der Boden 16 des gebildeten Topfes mit einer Öffnung 12 versehen, damit beim Aufsetzen die Luft entweichen kann und kein das Aufsetzen erschwerender Luftstau auftritt.

Beim manuellen Aufsetzen des Körpers 8 auf den Magneten 9 ruht der Lautsprecher mit seiner Vorderseite auf einer stabilen Unterlage 14, z.B. einem Arbeitstisch oder einem den Lautsprecher führenden Fließband. Das Material des Körpers 9 enthält homogen verteilte Zusätze zur Erhöhung des spezifischen Gewichtes, z.B. in Form von Quarzsand, Metallspänen, fein verteilten Kugeln hohen spezifischen Gewichtes und dergleichen.

Fig. 3 zeigt eine Abwandlung des Körpers 8 gemäß Fig. 2 in einer Sicht auf den offenen Teil des Topfes. Anstelle der Bohrung 12 gemäß Fig. 2 sind an der Innenwandung der inneren Öffnung 10 zwei in Axialrichtung verlaufende Nuten 17 vorgesehen, die sich bis zum Boden der inneren Öffnung 10 erstrekken. Diese Nuten ermöglichen den beim Aufsetzen des Körpers 8 auf den Magneten 9 notwendigen Luftausgleich. Der Körper 8 ist außerdem an einer Seite mit einer Abflachung 18 versehen. Eine solche Lösung kann notwendig sein, damit der Körper 8 die am Lautsprecherkorb vorgesehenen Anschlußklemmen für die Versorgungsleitung nicht verdeckt.

Bei einem praktisch erprobten Beispiel mit einen Topf 8 aus gummiartigen Material lagen folgende Werte vor:

Außendurchmesser des Topfes 8:

75 mm

Höhe des Topfes 8:

30 mm

Durchmesser der Öffnung 10:

40 mm

Tiefe der Öffnung 10:

15 mm

Breite der Nuten 17:

5 mm

Tiefe der Nuten 17:

3 mm

Material für den Topf 8:

Gummi + Flußspat und Bleioxyd oder Quarzsand.

## Patentansprüche

1. Farbfernsehempfänger mit einer Bildröhre (2) mit Lochmaske (6) sowie einem Lautsprecher (4), **dadurch gekennzeichnet**, daß an dem Lautsprechermagneten (9) ein zusätzlicher, die Masse des Lautsprechers (4) erhöhender Körper (8) angeordnet und die Masse des Körpers (8) so groß bemessen, daß die vom Lautsprecher (4) erzeugten Schwingungen (7) die Lochmaske (6) nicht zu Bildfehlern führenden Bewegungen anregen.

2. Empfänger nach Anspruch 1, dadurch gekennzeichnet, daß der Körper (8) aus Aluminium, Kunststoff, Holz oder Eisen besteht.

3. Empfänger nach Anspruch 1, dadurch gekennzeichnet, daß der Körper (8) aus einem gummiartigen oder gummiähnlichen, nachgiebigen Material besteht und kraftschlüssig selbsthaltend von Hand auf den Magneten (9) aufsteckbar ausgebildet ist.

4. Empfänger nach Anspruch 3, dadurch gekennzeichnet, daß das Material Altgummi, ein Schaumstoff hoher Dichte, Polyurethan oder Silikonkautschuk ist.

5. Empfänger nach Anspruch 3, dadurch gekennzeichnet, daß das Material einen das spezifische Gewicht erhöhenden, homogen verteilten Zusatz enthält.

6. Empfänger nach Anspruch 5, dadurch gekennzeichnet, daß der Zusatz aus Quarzsand, Metallspänen, verteilten Kugeln mit hohem spezifischen Gewicht, Flußspat oder Bleioxyd besteht.

7. Empfänger nach Anspruch 1, dadurch gekennzeichnet, daß die Masse des Körpers (8) in der Größenordnung von 100 bis 250 g liegt.

8. Empfänger nach Anspruch 1, dadurch gekennzeichnet, daß der Körper (8) topfförmig ausgebildet und auf den Magneten (9) aufgesetzt ist.

9. Empfänger nach Anspruch 8, dadurch gekennzeichnet, daß der Boden (16) oder die Innenwand des Topfes mit einer oder mehreren Luftdurchtrittsöffnungen (12, 17) versehen ist (Fig. 2, 3).

## Claims

1. A colour television receiver with a picture tube (2) having an aperture mask (6) and having a loudspeaker (4), **characterised in that** an additional body (8) increasing the mass of the loudspeaker (4) is arranged on the loudspeaker magnet (9) and the mass of the body (8) is dimensioned to be so large that the oscillations (7) produced by the loudspeaker (4) do not excite the aperture mask (6) to movements which lead to picture faults.

2. A receiver according to claim 1, **characterised in that** the body (8) consists of aluminium, plastics, wood or iron.

3. A receiver according to claim 1, **characterised in that** the body (8) consists of a yielding material of rubber type or similar to rubber and can be placed on to the magnet (9) so as to be self-mounting as a force-fit by hand.

4. A receiver according to claim 3, **characterised in that** the material is used rubber, a high density foam, polyurethane or silicone rubber.

5. A receiver according to claim 3, **characterised in that** the material contains an homogeneously distributed additive which increases the specific gravity.

6. A receiver according to claim 5, **characterised in that** the additive consists of quartz sand, metal shavings, distributed balls with a high specific gravity, fluorspar or lead oxide.

7. A receiver according to claim 1, **characterised in that** the mass of the body (8) is of the order of magnitude of 100 to 250 g.

8. A receiver according to claim 1, **characterised in that** the body (8) is cup-shaped and is placed on the magnet (9).

9. A receiver according to claim 8, **characterised in that** the base (16) or the inner wall of the cup is provided with one or more air passages (12, 17) (Figs. 2, 3).

**Revendications**

1. Récepteur de télévision couleur avec un tube image (2) avec un masque perforé (6) ainsi qu'un haut-parleur (4), **caractérisé en ce** qu'un corps supplémentaire (8) qui augmente la masse du haut-parleur (4) est placé sur l'aimant du haut-parleur (9) et que la masse du corps (8) est dimensionnée de manière telle que les oscillations (7) produites par le haut-parleur (4) n'incitent pas le masque perforé (6) à avoir des déplacements qui entraînent des défauts de l'image.

2. Récepteur selon la revendication 1, **caractérisé en ce** que le corps (8) est en aluminium, en plastique, en bois ou en fer.

3. Récepteur selon la revendication 1, **caractérisé en ce** que le corps (8) est en une matière du type caoutchouc ou une matière souple semblable au caoutchouc et qu'il est configuré en pouvant être placé sur l'aimant (9) à la main de manière à accrocher de manière clabotée.

4. Récepteur selon la revendication 3, **caractérisé en ce** que la matière est du caoutchouc régénéré, un plastique alvéolaire de haute densité, du polyuréthane ou du caoutchouc silicone.

5. Récepteur selon la revendication 3, **caractérisé en ce** que la matière contient un additif qui augmente le poids spécifique qui est réparti de manière homogène.

6. Récepteur selon la revendication 5, **caractérisé en ce** que l'additif est du sable silicieux, des copeaux de métal, des billes réparties d'un poids spécifique élevé, du spath fluor ou de l'oxyde de plomb.

7. Récepteur selon la revendication 1, **caractérisé en ce** que la masse du corps (9) est de l'ordre de grandeur de 100 à 250 g.

8. Récepteur selon la revendication 1, **caractérisé en ce** que le corps (8) est configuré en forme de pot et qu'il est placé sur l'aimant (9).

9. Récepteur selon la revendication 8, **caractérisé en ce** que le fond (16) ou la paroi intérieure du pot est pourvue d'une ou de plusieurs ouvertures de passage de l'air (12, 17) (fig. 2, 3).

Fig.1

Fig.3

Fig.2